# EUROPEAN PATENT APPLICATION

(11) **EP 2 432 097 A2**
(43) Date of publication of application: **21.03.2012**
(21) Application number: 11250803.1
(22) Date of filing: 14.09.2011
(51) Int. Cl.: H02J 9/06

(54) **Uninterruptible power supply system**

(30) Priority: 16.09.2010 GB 1015510
(71) Applicant: Goodrich Actuation Systems SAS, 78530 Buc (FR)
(72) Inventor: Abida, Wassim, 92210 Saint Cloud (FR); Grand, Serge, 91140 Villebon sur Yvette (FR)
(74) Representative: Bailey, Richard Alan

(57) **Abstract**

A power supply system comprises first electrical conversion means (22) for converting an alternating current electrical output from a generator (24) to a direct current electrical output for supply to an electrically powered motor (14), second electrical conversion means (26) for converting a direct current electrical output from a battery (28) to a direct current electrical output for supply to the motor (14), and control means (30) operable in the event of an interruption in the output from the first electrical conversion means (22) to supply power from the second electrical conversion means (26) to the motor (14).

## Description

This invention relates to a power supply system, and in particular to a power supply system suitable for use in aerospace applications, for example for use in supplying power to one or more actuators.

It is known to provide electrically powered actuators to drive the flight control surfaces of an aircraft for movement. Although in some applications the flight control surfaces may be driven for movement exclusively by electrically powered actuators, arrangements are also known in which hydraulically driven actuators are used as the primary drive for the flight control surfaces, electrically powered actuators being provided to serve as a backup to the hydraulic actuators for use in the event that there is a failure within the hydraulic actuators or associated control systems.

The electrical supply used to drive an electrically powered actuator in such an application is a conventional 115V AC supply which is derived from the engine powered electrical generators of the aircraft. The electrically powered actuators each include, or are powered by, an electric motor which typically requires a 270V DC power supply, and appropriate control circuits are provided to convert the 115V AC supply to a 270V DC supply for this purpose.

If there were a failure of both of the engines of an aircraft, or if the electrical generators associated therewith were to fail, there would be no hydraulic power and the power supply to the electrically powered actuators would be interrupted, thus there would be a risk of loss of control of the aircraft. Whilst such a scenario is unlikely, it is important to ensure that control over the flight control surfaces can be maintained even in these circumstances. It is known to provide ram air turbines to serve as an auxiliary power supply in such circumstances. However, deployment of ram air turbines typically takes 10 seconds or more, and so there is still a period of time in which the actuators are unable to be driven.

During the period between the loss of the generator supply and the power supply derived from the ram air turbines coming on stream, the only available electrical power supply is derived from batteries carried by the aircraft. These batteries are typically arranged to provide a 28V DC output. In order to use the battery output to operate the electrically powered actuators requires the use of an inverter to convert the 28V DC battery output to a 115V AC output. Although the use of such an inverter may operate satisfactorily and provide the required electrical output to permit continued operation of the electrically powered actuators and hence control over the flight control surfaces, such an inverter typically weighs in the region of 50kg. This represents a significant weight penalty, particularly bearing in mind that the inverter is only likely to be used for the short period of time, for example 10-15 seconds, between the interruption of the generator supply and the output of the ram air turbine coming on line.

It is an object of the invention to provide a power supply system in which at least some of the disadvantages of the system described hereinbefore are overcome or are of reduced effect.

According to the present invention there is provided a power supply system comprising first electrical conversion means for converting an alternating current electrical output from a generator to a direct current electrical output for supply to an electrically powered motor, second electrical conversion means for converting a direct current electrical output from a battery to a direct current electrical output for supply to the motor, and control means operable in the event of an interruption in the output from the first electrical conversion means to supply power from the second electrical conversion means to the motor.

The motor conveniently serves to drive an actuator of an aircraft, for example to control the position of a flight control surface thereof.

The first electrical conversion means conveniently converts a 115V AC output to a 270V DC output. The second electrical conversion means conveniently converts a 28V DC output to a 270V DC output. The second electrical conversion means thus conveniently takes the form of a DC-DC boost converter. Whilst specific voltage levels are mentioned hereinbefore, it will be appreciated that the invention is not restricted in this regard, and that it may be applied to other voltages or voltage ranges. For example, the first electrical conversion means may be arranged to convert an output in the range of 100 - 300V AC to an output in the range of 100 - 600V DC. Likewise, the second electrical conversion means may convert an output in the range 18 - 40V DC to an output in the range of 100 - 600V DC. The outputs of the first and second electrical conversion means are conveniently substantially the same.

The provision of such a DC-DC boost converter carries a significantly lower weight penalty than the provision of an inverter. The use of the invention thus permits the supply of electrical power to the motor to continue in the event of, for example, a failure of the generator, until such time as the ram air turbine power output comes on line whilst allowing weight savings to be made.

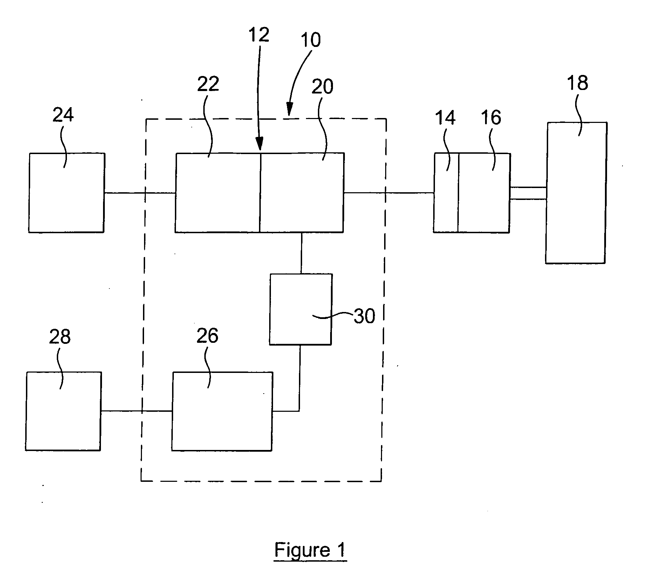

The invention will further be described, by way of example, with reference to the accompanying drawing (Figure 1) which is a diagrammatic illustration of a power supply system in accordance with one embodiment of the invention.

The power supply system 10 illustrated in Figure 1 comprises a motor drive electronics (MDE) unit 12 operable to control the operation of an electrically powered motor 14 forming part of an actuator 16 used to drive a flight control surface 18 of an aircraft for movement. The MDE unit 12 includes a control module 20 and a first conversion means in the form of a power conversion module 22. The power conversion module 22 is operable to convert an alternating electrical power output from an engine driven generator 24 to a direct current output suitable for use by the module 20 in controlling and driving the motor 14. For example, the output of the generator 24 will typically be in the region of 115V AC, and the control module 20 may require an electrical supply of 270V DC. In these circumstances, the conversion module 22 will serve to convert the 115V AC output to a 270V DC output.

As mentioned hereinbefore, in the event of an interruption in the output of the generator 24, for example as a result of a generator failure or loss of the associated engine, there is an interval of, for example, 10-15 seconds before the electrical output of a ram air turbine will come on stream to provide backup power to the control module 20 and motor 14. In accordance with the invention, in order to maintain power to the control module 20 and motor 14 during this interval, the power supply system 10 further comprises a second conversion means in the form of a DC-DC boost converter 26 operable to convert the output of an onboard battery 28 to an output supply suitable for use by the control module 20 and motor 14. The battery 28 will typically have an output of approximately 28V DC, and so the boost converter 26 will be operable to convert a 28V DC voltage to the aforementioned 270V DC level required by the control module 20 and motor 14. A number of boost converters capable of providing this functionality are well known and so no further description of the nature or operation thereof is set out herein.

The power supply system 10 further comprises a controller 30 operable in the event of a failure in the supply of power to the power conversion module 22, to connect the output of the boost converter 26 to the control module 20 so that battery power, converted by the boost converter 26 is used to power the control module 20 and motor 14, thereby permitting continued operation of the motor 14, and hence control over the flight control surface to be maintained during the interval between loss of supply from the generator and the output of the ram air turbine coming on line.

It is thought that a DC-DC boost converter capable of meeting the aforementioned requirements will weigh in the region of 10kg, thus a weight saving of, for example, approximately 40kg may be made in this manner.

In the arrangement illustrated the conversion module 22, and boost converter 26 (in the event of a failure), supplies power to only a single module 20 and motor 14. However, this need not always be the case, and several such modules 20 and associated motors 14 may be supplied by a single conversion unit 22 and boost converter 26, in the event of a failure as outlined hereinbefore, if desired.

Although one specific embodiment of the invention is described hereinbefore, it will be appreciated that the invention is not restricted to this specific arrangement and that a number of modifications or alterations may be made thereto without departing from the scope of the invention. Whilst specific voltage levels are mentioned hereinbefore, it will be appreciated that the invention is not restricted in this regard, and that it may be applied to other voltages or voltage ranges. For example, the first electrical conversion means may be arranged to convert an output in the range of 100 - 300V AC to an output in the range of 100 - 600V DC. Likewise, the second electrical conversion means may convert an output in the range 18 - 40V DC to an output in the range of 100 - 600V DC. The outputs of the first and second electrical conversion means are conveniently substantially the same.

## Claims

1. A power supply system comprising first electrical conversion means (22) for converting an alternating current electrical output from a generator (24) to a direct current electrical output for supply to an electrically powered motor (14), second electrical conversion means (26) for converting a direct current electrical output from a battery (28) to a direct current electrical output for supply to the motor (14), and control means (30) operable in the event of an interruption in the output from the first electrical conversion means (22) to supply power from the second electrical conversion means (26) to the motor (14).

2. A system as claimed in Claim 1, wherein the motor (14) serves to drive an actuator (16) of an aircraft.

3. A system as claimed in Claim 2, wherein the actuator (16) controls the position of a flight control surface (18) thereof.

4. A system as claimed in any of the preceding claims, wherein the first electrical conversion means (22) is arranged to convert an output in the range of 100 - 300V AC to an output in the range of 100 - 600V DC.

5. A system as claimed in any of the preceding claims, wherein the second electrical conversion means (26) is arranged to convert an output in the range 18 - 40V DC to an output in the range of 100 - 600V DC.

6. A system as claimed in any of the preceding claims, where the outputs of the first and second electrical conversion means (22, 26) are substantially the same.

7. A system as claimed in any of the preceding claims, wherein the first electrical conversion means (22) converts a 115V AC output to a 270V DC output.

8. A system as claimed in any of the preceding claims, wherein the second electrical conversion means (26) converts a 28V DC output to a 270V DC output.

9. A system as claimed in any of the preceding claims, wherein the second electrical conversion means (26) takes the form of a DC-DC boost converter.
